# EUROPEAN PATENT SPECIFICATION

(11) **EP 3 660 231 B1**
(45) Date of publication and mention of the grant of the patent: **23.02.2022**
(21) Application number: 19207829.3
(22) Date of filing: 07.11.2019
(51) Int. Cl.: E02F 9/26, B60W 60/00, E02F 9/20, B66C 13/46, E01C 19/00, G01D 1/00, G05D 1/00, B60W 30/085, B60W 30/095, B66C 13/48, B66F 9/06, B66F 9/075, G05D 1/02

(54) **SYSTEM AND METHOD FOR AUTONOMOUS OPERATION OF HEAVY MACHINERY**
SYSTEM UND VERFAHREN ZUM AUTONOMEN BETRIEB VON SCHWEREN MASCHINEN
SYSTÈME ET PROCÉDÉ DE FONCTIONNEMENT AUTONOME DE MACHINES LOURDES

(30) Priority: 08.11.2018 US 201862757192 P
(43) Date of publication of application: 03.06.2020
(73) Proprietor: Intsite Ltd, Haifa (IL)
(72) Inventor: RAM-ON, Tzach, Haifa (IL); RAM-ON, Mor, 3467815 Haifa (IL); WEISS, Gil Avraham, Atlit (IL)
(74) Representative: Russell, Tim

(56) References cited:
- EP-A2- 2 187 166
- WO-A2-2017/120336
- US-A1- 2017 285 657

## Description

### TECHNICAL FIELD OF THE INVENTION

This invention is generally related to operation and control of heavy machinery and more particularly to an autonomous operation and control of heavy machinery and automatic monitoring of parameters related to the operation and control of heavy machinery.

### BACKGROUND OF THE INVENTION

Operation of heavy machinery, such as: cranes; bulldozers; excavators; backhoe loaders; trucks; forklifts; and the like, in a crowded and packed construction or other sites is very challenging. Current operation methods rely heavily on the professionalism of the operator operating the heavy machinery or the signaller (also known as a 'dogger', 'rigger' or 'swamper') directing the operator. For example, in order to direct a crane in a construction site, at least two different people must communicate with each other (e.g., by wireless communication means) the operator and a signaller. In addition, the men loading and unloading the crane must also be included in the communication session. Therefore, the signaller must direct the operator from the loading point to the unloading point while avoiding collision with other objects, building or people in the site. This form of manual operation is time consuming, dangerous and subject to many human errors.

An example for autonomous navigation of an industrial machine, is given in EP 2187166. The industrial machine has a main unit, a working implement installed on the main unit, and two cameras each mounted at a known position with respect to a machine center of the main unit. At least three targets are installed on the working implement so that the targets are within visual field of each of the two cameras. An arithmetic processing extracts the images of at least three targets in common to the images from stereo-images taken by the two cameras, for obtaining a three-dimensional position of each target image, and for calculating a position and a posture of the implement with respect to the industrial machine main unit based on the three-dimensional position obtained.

Another example for autonomous navigation of an industrial machine, is given in WO 2017/120336. Systems and methods are provided for navigating an autonomous vehicle using reinforcement learning techniques. In one implementation, a navigation system for a host vehicle may include at least one processing device programmed to: receive, from a camera, a plurality of images representative of an environment of the host vehicle; analyze the plurality of images to identify a navigational state associated with the host vehicle; provide the navigational state to a trained navigational system; receive, from the trained navigational system, a desired navigational action for execution by the host vehicle in response to the identified navigational state; analyze the desired navigational action relative to one or more predefined navigational constraints; determine an actual navigational action for the host vehicle, wherein the actual navigational action includes at least one modification of the desired navigational action determined based on the one or more predefined navigational constraints; and cause at least one adjustment of a navigational actuator of the host vehicle in response to the determined actual navigational action for the host vehicle.

Therefore, there is a need for an automated and autonomous system for operation of heavy machinery that will be safer and faster.

### SUMMARY OF THE INVENTION

The invention is directed to a system for autonomous operation of heavy machinery. The system includes at least one camera, configured to be attached to the heavy machinery or to be located elsewhere at a location which allows the camera to capture images of at least a movable portion of the heavy machinery and at least a portion of a site at which the heavy machinery is operating; and a controller configured to: receive from the at least one camera at least two images of the said at least movable portion of the heavy machinery and the portion of the site; determine a current position of the said at least movable portion of the heavy machinery; receive a destination position of the said at least movable portion of the heavy machinery; identify locations and dimensions of objects located in an area of the site comprising the current position and the destination position based on analyzing the received at least two images; calculate a trajectory for the said at least movable portion of the heavy machinery from the current position to the destination position, as to avoid collision of the said at least movable portion of the heavy machinery with any one of the objects; and automatically move the said at least movable portion of the heavy machinery along the calculated trajectory.

In preferred embodiments, determining at least one of the current position and the destination position may include receiving the position from at least one of: a positioning system, a laser beam pointer and a database comprising a digital model of the site. In some embodiments, determining the at least one of the current position and the destination position comprises calculating the at least one of the current position and the destination positions from the received images.

In some embodiments, the controller may further be configured to: receive from the at least one camera a plurality of images from the trajectory during the movement of the heavy machinery; identify at least one of: additional locations and dimensions of objects located along the trajectory; and change the trajectory based on the at least one of: identified additional locations and dimensions.

In preferred embodiments, the additional locations and dimensions of objects may include at least one of: new locations of already identified objects and locations and dimensions of new objects. In some embodiments, the system may further include one or more sensors, in some embodiments, the one or more sensors are selected from a group consisting of: Light Detection and Ranging (LIDAR) sensor, Global Navigation Satellite System (GNSS), Inertial Measurement Unit (IMU), Barometer, RF detector, Laser Detector, Ultrasonic sensor, microphone, temperature and humidity sensor, accelerometer, gyroscope, IR camera, stereo camera, Encoders, proximity sensor, Beacon Potentiometer, Inclination sensor and the like.

In preferred embodiments, calculating a trajectory may include: calculating safety margins between the objects and the said at least movable portion of said heavy machinery and its load. In some embodiments, calculating a trajectory may include: receiving additional data: the additional data may include at least one of: dimensions of a load carried by the said at least movable portion of said heavy machinery, dimensions of the heavy machinery, regulative requirements, safety requirements, environmental conditions and digital model of the site; and calculating the trajectory based on the additional data.

In preferred embodiments, calculating a trajectory for the heavy machinery from the current position to the destination position may include: calculating such trajectory that may reduce the traveling time of the load from the current position to the destination position. In some embodiments, the system may further include a communication module for communicating with: at least one of: the heavy machinery's processor, the heavy machinery's actuators and external computing device.

The invention is also directed to a method for autonomous operation of heavy machinery, the method including the steps of: receiving from at least one camera at least two images of at least a movable portion of a heavy machinery and at least a portion of a site, wherein the at least one camera is configured to be attached to the heavy machinery or to be located elsewhere at a location which allows the camera to capture images of the said at least at least movable portion of the heavy machinery and at least the portion of a site at which the heavy machinery is operating; determining a current position of the said at least movable portion of the heavy machinery; determining a destination position of the said at least movable portion of the heavy machinery; identifying locations and dimensions of objects located in an area of the site includes the current position and the destination position based on analyzing the received at least two images; calculating a trajectory for the said at least movable portion of the heavy machinery from the current position to the destination position, as to avoid collision of the heavy machinery with any one of the objects; and autonomously moving the said at least movable portion of the heavy machinery along the calculated trajectory.

In preferred embodiments, calculating the trajectory may include determining the velocity and/or acceleration at which the load may be moved along the trajectory. In some embodiments, at least one of: the trajectory, the velocity and the acceleration may further be calculated as to reduce vibrations or fluctuations of the said at least movable object. In some embodiments, at least one of: the trajectory, the velocity and the acceleration may further be calculated as to reduce the traveling time of the load along the trajectory.

In preferred embodiments, determining at least one of the current position and the destination position may include receiving the position from at least one of: a position system, a laser beam pointer and a database comprising a digital model of the site. In some embodiments, determining the at least one of the current position and the destination position comprises calculating the at least one of the current position and the destination positions from the received images. In some embodiments, receiving from the at least one camera a plurality of images from the trajectory during the movement of the heavy machinery; identifying at least one of: additional locations and dimensions of objects located along the trajectory; and changing the trajectory based on the at least one of: identified additional locations and dimensions. In some embodiments, the additional locations and dimensions of objects include at least one of: new locations of already identified objects and locations and dimensions of new objects. In some embodiments, the method may further include calculating safety margins between the objects and the said at least movable portion of the heavy machinery.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
Fig. 1 is a high-level block diagram of a system for autonomous operation of heavy machinery according to some embodiments of the invention;
Fig. 2 is a flowchart of a method of autonomous operation of heavy machinery according to some embodiments of the invention; and
Fig. 3 is an illustration of a calculated trajectory for moving the heavy machinery according to some embodiments of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE PRESENT INVENTION

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

Some aspects of the invention may be directed to a system and method of autonomous operation and control of heavy machinery. As used herein, heavy machinery according to embodiments of the invention may include all heavy-duty vehicles/machines, specially designed for executing tasks, for example, construction tasks, loading tasks, unloading tasks, drilling tasks, digging tasks, transporting tasks, tasks involving earthwork operations and the like. For example, heavy machinery may include: tractors; cranes; bulldozers; excavators; backhoe loaders forklifts; and the like. Some embodiments of the invention may be directed to heavy machinery that is configured to move and maneuver in a site. As used herein the word "site" may be directed to any site that may require the use of heavy machinery, for example, a construction site, a mine, a port, logistical warehouses, agricultural sites, an airport, a civil engineering project and the like.

A system and method according to embodiments of the invention may allow fully automated operation of the heavy machinery, for example, in the site, using machine vision, artificial intelligence (AI), machine learning (ML) and deep learning (DL) methods. The system may receive two or more images that include at least a movable portion of the heavy machinery and at least a portion of a site at which the heavy machinery is operating, such that the system may identify the location of the said at least movable portion of the heavy machinery in the site. After determining the current location (e.g., the cargo loading point) the system may receive a destination position (e.g., the cargo unloading point) and calculate a trajectory for the said at least movable portion of the heavy machinery from the loading position to the unloading position.

In some embodiments, the calculated trajectory may take into consideration both stationary objects and movable objects located in the site. The system may automatically control the at least movable portion of the heavy machinery, for example, by communicating with the heavy machinery controller, and/or actuators to move (its movable portion) along the calculated trajectory. In some embodiments, the system may continuously inspect the movable objects (e.g., people, moving equipment, etc.) in the site, during the movement of the heavy machinery, to decide if a new trajectory should be calculated. In some embodiments, the calculated trajectory may further take into consideration additional requirements, such as: reducing the traveling time of the loads, reducing vibrations of the load during traveling and the like. These considerations may increase the overall efficiency of the construction process. The automated and autonomous system and method according to some embodiments of the invention may allow unlimited operation hours thus may further increase the construction process efficiency.

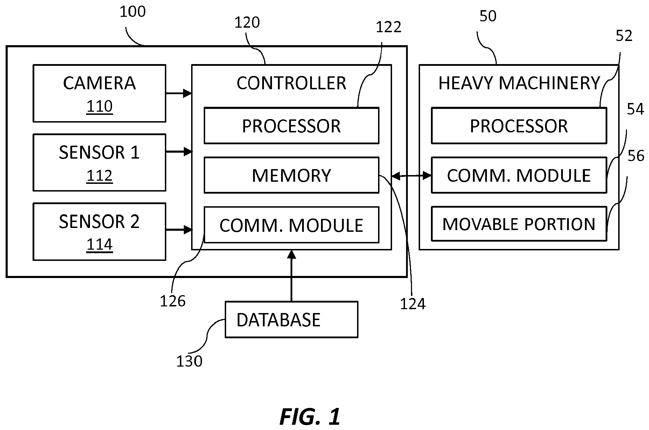

Reference is now made to Fig. 1 which is a high-level block diagram of a system for autonomous operation of heavy machinery according to some embodiments of the invention. A system 100 for autonomous operation of heavy machinery may include at least one camera 110 and at least one controller 120. At least one camera 110 may be configured to be attached to a heavy machinery 50 at a location which allows camera 110 to capture images of at least a movable portion 56 of heavy machinery 50 and at least a portion of a site at which the heavy machinery 50 is operating. Additionally or alternatively, camera 110 may be located elsewhere (e.g., on the site) which may allow camera 110 to capture images of at least a movable portion 56 of heavy machinery 50 and at least a portion of a site at which heavy machinery 50 is operating, for example, camera 110 may be located on a drone flying above heavy machinery 50. Camera 110 may be any image capturing device, that may capture images in real time, in visible light, infra-red or any other suitable wavelength, for example, thermal camera, stereo camera, monocular camera, depth camera. At least one camera 110 may capture discrete (e.g., single) images or may film a stream of images (e.g., a video).

In some embodiments, at least one camera 110 may be located on a part of heavy machinery 50 that may allow camera 110 to capture at least a portion of the site and a portion of the at least movable portion of the heavy machinery 50 in the same frame. For example, the camera may be attached to the lower surface of the horizontal jib of a tower crane (e.g., a stationary portion of the crane), looking downward towards the site while capturing also at least a portion of a cable and the hook holding the load. In some embodiments, two or more cameras 110 may be located at different locations (e.g., parts) on heavy machinery 50, for example, one camera may be attached to the lower surface of the horizontal jib of the tower crane and another camera to the mast of the tower crane. In some embodiments, the camera may be connected to a moveable portion of the heavy machinery, for example, on a trolley traveling along the horizontal jib. In yet another example, at least one camera 110 may be attached to a front of a bulldozer or an excavator, for example, on the frame-head of the operator's cabin. In some embodiments, at least one other camera 110 may be located at the back of the bulldozer or the excavator, for sensing backwards movements and/or on the sides of the bulldozer or the excavator (e.g., the right or left sides of the frame-head of the operator's cabin).

In some embodiments, at least one camera 110 may be in communication (either wired or wireless) with at least one controller 120. Controller 120 may include a processor 122 that may be any processing unit (e.g., a chip) configured to process data (e.g., images or videos taken) and execute instructions, a memory 124 for storing instructions and/or data and a communication module 126 for communicating with other devices. Memory 124 may include codes and/or instructions of methods according to some embodiments of the invention, for example, a method of autonomous operation of heavy machinery. Memory 124 may be a computer or processor non-transitory readable medium, or a computer non-transitory storage medium. In some embodiments, controller 120 may be in communication or may include a database 130.

Database 130 may store data associated with the site or sites, for example, two-dimensional (2D) and/or three-dimensional (3D) plans of the site (e.g., of the buildings), a Building Information Modeling (BIM), previously taken images of the site (e.g., taken for example, from camera(s) 110, from a drone and the like), data associated with heavy machinery 50 (such as, for example, maneuverability limitations, height, location, range etc.), load related data (e.g., uploading and unloading positions in the site, type of load, weight, priority, handling requirements etc.) and the like. In some embodiments, processor 122, memory 124 and/or database 130 may be a cloud based processing and/or storage services.

Communication module 126 may include any module or modules for wireless and wired communication with, at least one camera 110, a processor 52 controlling heavy machinery 50, database 130 or any other external computerized device. Communication module 126 may include a wired and/or wireless network interface card (NIC). In some embodiments, integration/communication between communication module 126 of system 100, communication module 54 of heavy machinery 50 and/or any external device (e.g., a drone carrying a camera) may be achieved using any type of remote connection, for example, any known radiofrequency (RF) protocols. For example, if heavy machinery 50 includes a controllable processor/controller such as, processor 54, system 100 may use any known reprogramming protocol to reprogram (e.g., take over) processor 54, using PLC, CAN and the like. In some embodiments, if heavy machinery 50 does not include a controllable processor/controller, a programmable module may be assembled and electrically connected directly to the electric control unit of the motors (PLC/CAN-ECU) or the power board of heavy machinery 50, between power grid and power board. The programmable module may be in communication with communication module 126 and may receive instructions from processor 122.

In some embodiments, system 100 may further include or be in communication with one or more sensors 112 and/or 114 for providing additional data acquired from the site to controller 120. One or more sensors 112 and/or 114 may be located or attached to heavy machinery 50 or elsewhere in the site. In some embodiments, one or more sensors 112 and/or 114 may be located or attached to different devices associated with the site, for example, a drone flying above the site. One or more sensors 112 and/or 114 may be selected from a group consisting of: Light Detection and Ranging (LIDAR) sensor, Global Navigation Satellite System (GNSS), Inertial Measurement Unit (IMU), Barometer, RF detector, Laser Detector, Ultrasonic sensor, microphone, temperature and humidity sensor, accelerometer, gyroscope, IR camera, stereo camera, beacon (using RFID, Bluetooth, BLE, NFC tags and like), potentiometer, Inclination sensor, Encoders, proximity sensor and the like.

The heavy machinery (50) includes at least a movable portion 56 (e.g., with respect to other parts of heavy machinery 50), for example, in a tower crane the at least movable portion may include: a slewing unit, the horizontal jib, a hoist winch, the cables and the hook. In some embodiments, heavy machinery 50 may include stationary portions (not illustrated), configured to support the movable portion, for example, the base and the mast of a tower crane.

In some embodiments, heavy machinery 50 may include a communication module 54 for communicating wirelessly with system 100, for example, via communication module 126. For example, communication module 54 may include a cellular transmitter or modem, a Wi-Fi communication unit, a satellite communication unit or the like for communicating with remote devices via a communication network, such as, for example, the Internet. In some embodiments, communication module 54 may include an interface unit for communicating with processor 52 of heavy machinery 50.

In some embodiments, system 100 may include Human-Machine-Interface (HMI), for example, for regulative reasons, such as, monitoring, real time performance easements, manual take-over and more; or for user request or for maintenance needs. In some embodiments, the HMI may be based on one or more of: augmented\virtual reality (AR\VR) device, touchscreen, Gestures recognition, Vocal command (e.g., Natural Language Processing) and the like.

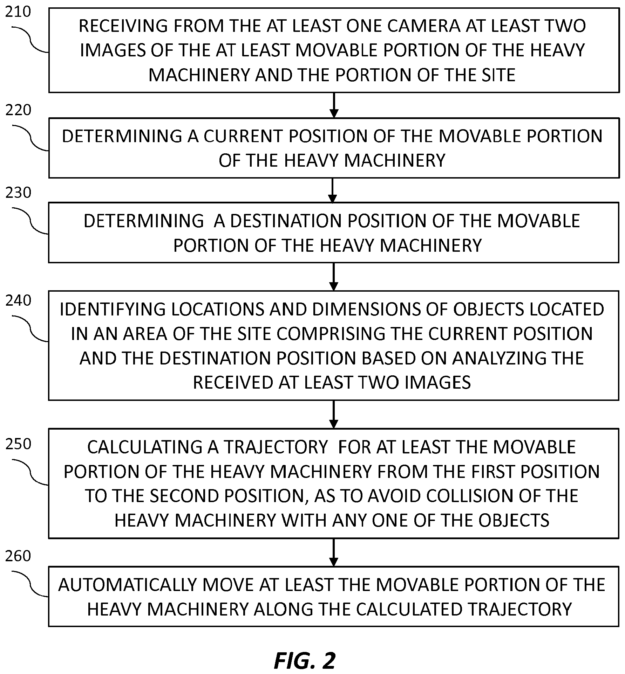

Reference is now made to Fig. 2 which is a flowchart of a method of autonomous operation of heavy machinery according to some embodiments of the invention. The method of Fig. 2 may be executed by controller 120 of system 100 or by any other suitable controller. In step 210, the controller may receive from the at least one camera at least two images, each of the at least two images including the at least movable portion of the heavy machinery and the portion of the site. For example, controller 120 may receive from camera 110 located on the lower surface of the horizontal jib, of a tower crane, two different images, each including at least the hook (and optionally also the load) and two different views of the site. In another example, camera 110 located on the frame-head of a bulldozer operator's cabin may capture at least two different images each including the bulldozer's blade and a portion of the site, for example, by changing the angle from which the camera captures the images. In yet another example, camera 110 located on the frame-head of a excavator operator's cabin may capture at least two different images each including the excavator's boom and a portion of the site. In some embodiments, camera 110 located on a drone may provide at least two different images each including an excavator's boom and a portion of the site, for example, by changing the position of the drone.

Alternatively, the two images may be received from two cameras 110 located at two different locations on the heavy machinery, thus providing images from two different angles that may allow the formation of a 3D model of movable portion 54 and its surroundings in the site.

In step 220, the controller may determine a current position of the movable portion of the heavy machinery. In some embodiments, controller 120 may determine the current position from analyzing the received two images, using any known image analysis method, for example, simultaneous localization and mapping (SLAM) and key-points detection, or stitching overlapped images together while making the necessary scaling and rotation, so that the images would blend in smoothly. Additionally, or alternatively, the current position may be received or determined using other sensors (e.g., sensors 112 and 114) for example, the current position may be GNSS coordinates, may be determined using a LIDAR and the like. In some embodiments, the heavy machinery current position (and/or the location of the movable portion or part of the heavy machinery) may be the starting position for loading the load. In some embodiments, the starting position may be different from the current position and system 100 may control heavy machinery 50 (and/or movable portion thereof) to move to the starting position.

In some embodiments, the starting position may be received, form a user interface (e.g., an HMI), automatically from a computer program for sites management and the like. The starting position may be received as, for example, GNSS coordinates, a location on a 3D model of the site, either generated by system 100 (e.g., from the images) and/or received from a database (e.g., database 130) and the like.

In step 230, the controller may receive a destination position for the movable portion of the heavy machinery. In some embodiments, the destination position may be the starting position, when heavy machinery 50 is not at the starting position for loading the heavy machinery. Alternatively, the destination position may be the destination for providing and unloading the heavy machinery when the heavy machinery is already at the starting position. The destination position may be received via a user interface, automatically from a computer program for sites' management and the like. The destination position may be received as, for example, GNSS coordinates, a location on a 3D model of the site, either generated by system 100 (e.g., from the images) and/or received from a database (e.g., database 130) and the like.

In some embodiments, the controller may further receive images of the site that include, the current location, the destination location and an area in-between the two locations. In some embodiments, the current location and the destination location may be included in a single image. In some embodiments, the current location and the destination location may be included in two different images. In some embodiments, the controller may generate and/or receive a 3D model of the site and may receive the current location and the destination location may be included as locations in the 3D model. According to the invention the controller(120) receives data related to the load to be loaded and transferred by heavy machinery 50, for example, the type, weight, outer dimensions and the like.

In some embodiments, a 3D model of the site at the current day (e.g., the working day at which the load is to be moved) may be received from a BIM. The received BIM 3D model may be updated based on the analysis of the received at least one image. Images taken from the site during the current day (may be analyzed and combined with the BIM such that more accurate state of the objects in the site (e.g., additional building already built) are taken into account.

In step 240, the controller may identify locations and dimensions of objects located in an area of the site comprising the current position and the destination position based on analyzing the received at least two images. Controller 120 may identify the location and the outer boundaries of all the object located in an area of the site comprising the current position and the destination position. Controller 120 may be configured to receive additional images in real time and may further identify changes in the position of the objects, for example, movement of people, movement of other machines or vehicles, replacing of loads and goods etc. In some embodiments, controller 120 determine the instantaneous position and heading of each moving object in real-time, in order to prevent collision of movable portion 56 with the moving objects

In some embodiments, controller 120 may further receive additional data from additional sensors, such as LIDAR for the calculation of the location and the outer boundaries (e.g., the distances) between elements in the relevant portion of the site. In yet another example, controller 120 may further receive additional data from an ultrasonic sensor placed on the crane's hook that may measure the near surroundings of the hook, as it moves in the site

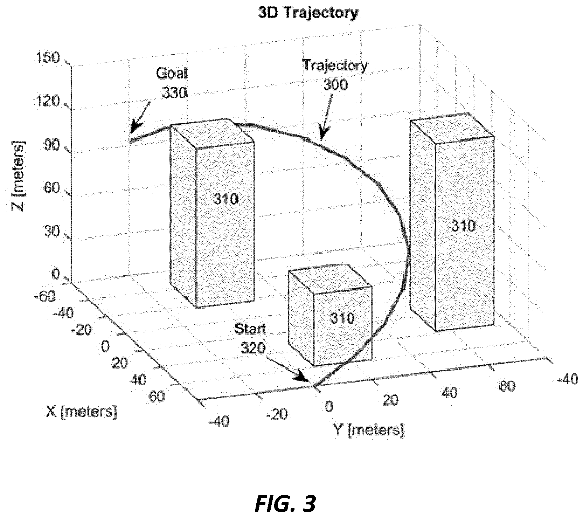

Reference is now made to Fig. 3 which is an illustration of a portion of a site that includes a current position 320 (denoted as "start") and a destination position 330 (denoted as "goal") according to some embodiments of the invention. The portion illustrated in Fig. 3 includes several objects 310 (e.g., buildings) located in the area of the site comprising the current position and the destination position. Controller 120 may provide a 3D map/model of the portion as discussed herein, for example, using a combination of BIM and the received images and/or video stream.

In step 250, the controller may calculate a trajectory for at least the movable portion of the heavy machinery from the current position to the destination position, as to avoid collision of the heavy machinery with any one of the objects, for example, a trajectory 300 illustrated in Fig. 3. The trajectory may be calculated as to maintain safety margins between the movable portion of the heavy machinery and the objects in the portion of the site.

In some embodiments, calculating a trajectory for the heavy machinery may include geofencing methods with or without using Global Navigation Satellite System (GNSS) technology. In some embodiments, controller 112 may virtually divide the site to sectors/areas, having a common requirement, for example: "safe" zones or "no-fly" zones in which the heavy machinery is forbidden from traveling. The sectors or areas, may be defined by virtual fences, defined from images taken by camera 110 using image processing methods (vision-based), or using HMI. Additionally or alternatively, the virtual fences of sectors or areas may be defined from data received from bacons (e.g., sensors) for example: RFID marking obstacles or the borders of the sectors or areas.

In some embodiments, calculating the trajectory may include determining the velocity and/or acceleration at which the load may be moved along the trajectory. In some embodiments, the trajectory, the velocity and/or the acceleration may be calculated such as to reduce vibrations or fluctuations of the load, for example, vibrations or fluctuations in the cable of the crane. In such case the load may be moved along a trajectory that may allow as little as possible vibrations of the cable. In some embodiments, controller 120 may further receive environmental data, such as, wind speed and direction and may further calculate the trajectory, the velocity and/or the acceleration based on the environmental data.

In some embodiments, the trajectory, the velocity and/or the acceleration may be calculated as to reduce the traveling time of the load along the trajectory. In some embodiments, such calculation may increase the building efficiency by reducing loads traveling time and/or damages to loads occurred due to vibrations or fluctuations.

In some embodiments, calculating a trajectory for the heavy machinery may include receiving an additional data. In some embodiments, the additional data may include at least one of: dimensions of a load carried by the heavy machinery, information related to the heavy machinery, regulative requirements, safety requirements, environmental conditions and digital model of the site. For example, the dimensions of a load carried by the heavy machinery may include structural and physical limitations, such as, weight, volume, shape, surface area, density and the like. The dimensions of the load may allow processor 122 to position the load between obstacles and objects safely as to avoid collision. The dimensions of a load carried by the heavy machinery may be received from the BIM or from a user via communication module 126 or a user interface included in controller 120.

In some embodiments, information related to the heavy machinery may include, structural and physical limitations such as machine dimension, position and posture, manufacture limitations and instructions, for example, maximal loading moments and forces and the like. The information related to the heavy machinery may be received from the manufacture of the heavy machinery databases, manuals and the like. In some embodiments, processor 122 may calculate the trajectory in consideration with the movement and size limitations of heavy machinery 50 (e.g., what is the minimal turning radius of heavy machinery 50).

In some embodiments, regulative requirements (e.g., regulative legislation) may further be taken under consideration in calculating the trajectory. For example, a kindergarten nearby the site may require a safety zone of several meters from the fences of the kindergarten at which no heavy machinery can pass , or swing a load from above.

In some embodiments, safety requirements, such as, the safety protocols of the site (e.g., safety protocols of operating a mine, safety protocols of operating an airport, etc.) may further be taken under consideration in calculating the trajectory. For example, locations defined as "populated" (e.g., workers caravan, a cantina, a medical aid center, etc.) may require a safety zone of several meters from the borders of such populated locations at which no heavy machinery can pass.

In some embodiments, environmental conditions such as wind, humidity, temperature may also be taken under consideration in calculating the trajectory. In some embodiments, processor 122 may determine the influence of, wind, rain, humidity and the like on the maneuverability of heavy machinery 50. For example, deep mud or heavy wind may limit the maneuverability of heavy machinery 50.

In some embodiments, processor 122 may receive the site's digital model and use data from the digital model, such as BIM. Processor 122 may use data received from sensors 112 and/or 114 for calculating the trajectory. For example, processor 122 may use data from GNSS transceiver for estimating the current position of heavy machinery 50.

In step 260, at least the movable portion of the heavy machinery may be autonomously moved along the calculated trajectory. In some embodiments, controller 120 may communicate with processor 52 of heavy machinery 50 via communication modules 126 and 54 to provide processor 52 with instructions as to where to move heavy machinery 50. In some embodiments, controller 120 and/or processor 52 may convert trajectory 300 into a series of instructions for the motors and actuators providing the movement to movable portion 56. This series of instructions may be converted into the movement of movable portion 56 along trajectory 300.

In order to safely control the movement of at least the movable portion of the heavy machinery, processor 122 may have to recalculate or redetermine the location of movable portion 56 in real time. For example, the redetermination of the location of movable portion 56 may be conducted in two steps. A first step may include mapping the site using a plurality of images previously taken by camera 110 or from other cameras at the same location. The mapping may include identifying stationary objects and landscape of the site. A second step may include matching a real time image taken from camera 110 to identify the current location of movable portion 56.

In another example, the redetermination of the location of movable portion 56 may be conducted using any known Simulated Localization and Mapping (SLAM) algorithm. In yet another example, the redetermination of the location of movable portion 56 may be conducted using sensors such as GNSS, Beacon or like for estimating movable part location.

In some embodiments, a continuous stream of images and/or signals may be received by controller 120 as heavy machinery 50 is moving along trajectory 300. In some embodiments, controller 120 may receive from the at least one camera a plurality of images from the trajectory during the movement of the heavy machinery and may identify at least one of: additional locations and dimensions of objects located along the trajectory. For example, people or vehicles (e.g., other heavy machinery) crossing the trajectory may be inspected, by analyzing the images captured during the movement of heavy machinery 50. The analysis may be conducted using any suitable image analysis methods (e.g., classical image processing methods, machine/deep learning methods and the like), for example, methods configured to identify moving objects and moving people, obstacles and the like. In some embodiments, controller 120 may also predict the general heading of each identified moving object (e.g. to where the person is heading) and may further recalculate trajectory 300 to avoid collision with the identified moving object, as both the object and heavy machinery 50 are on the move. In some embodiments, controller 120 may change the trajectory based on the at least one of: identified additional locations and dimensions of the moving objects.

In some embodiments, the method may further include calculating safety margins between the predicted motion of a movable (e.g., dynamic) objects and the heavy machinery. For example: for slow and static objects the safety margins may be shorter, as there is a smaller risk of unexpected movement (e.g., 3 meters), where for moving objects, an increased margin may be used (e.g., 6 meters in heading direction). In addition, the safety margins may also be determined by the possible movement direction, for example, for a vehicle, safety margins from its sides will be lower than its driving direction, as there is no chance of driving in perpendicular to its driving direction.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the scope of the invention as defined in the claims.

## Claims

1. A system (100) for autonomous operation of heavy machinery (50), comprising:
at least one camera (110), configured to be attached to the heavy machinery or to be located elsewhere at a location which allows the camera to capture images of at least a movable portion (56) of the heavy machinery and at least a portion of a site at which the heavy machinery is operating **characterised by** a controller (120) configured to:
receive from the at least one camera at least two images of the at least movable portion of the heavy machinery and the portion of the site;
determine a current position (320) of the movable portion of the heavy machinery and a load carried by the movable portion;
receive a destination position (330) of the movable portion of the heavy machinery and the load;
identify locations and dimensions of objects (310) located in an area of the site comprising the current position and the destination position based on analyzing the received at least two images;
calculate a trajectory (300) for at least the movable portion of the heavy machinery and the load from the current position to the destination position, as to avoid collision of at least one of: the movable portion of heavy machinery and the load with any one of the objects; and
autonomously move at least the movable portion of the heavy machinery along the calculated trajectory.

2. The system of claim 1, wherein determining at least one of the current position and the destination position comprises receiving the position from at least one of: a position system, a laser beam pointer , a beacon, image processing methods, GPS transceiver, and a database comprising a 2D or 3D digital model of the site.

3. The system of claim 1, wherein determining the at least one of the current position and the destination position comprises calculating the at least one of the current position and the destination positions from the received images.

4. The system according to any one of the preceding claims, wherein the controller is further configured to:
receive from the at least one camera a plurality of images from the trajectory during the movement of the movable portion of the heavy machinery;
identify at least one of: additional locations and dimensions of objects located along the trajectory; and
change the trajectory based on the at least one of: identified additional locations and dimensions.

5. The system of claim 4, wherein the additional locations and dimensions of objects include at least one of: new locations of already identified objects and locations and dimensions of new objects.

6. The system according to any one of the preceding claims, further comprising one or more sensors, wherein the one or more sensors are selected from a group consisting of: GNSS transceiver, ultrasound sensor and Light Detection, Ranging (LIDAR) sensor, Beacon Potentiometer and Inclination sensor.

7. The system according to any one of the preceding claims, wherein, calculating the trajectory comprises:
calculating safety margins between the objects and the heavy machinery and its load.

8. The system according to any one of the preceding claims, wherein, calculating the trajectory comprises:
receiving additional data: the additional data includes at least one of:
dimensions of a load carried by the heavy machinery, information related to the heavy machinery, regulative requirements, safety requirements, environmental conditions and digital model of the site; and
calculating the trajectory also based on the additional data.

9. The system according to any one of the preceding claims, further comprising a communication module for communicating with at least one of: the heavy machinery's processor, the heavy machinery's actuators, and external computing device.

10. A method for autonomous operation of heavy machinery, **characterised by** the steps of: :
receiving from at least one camera (110) at least two images of at least movable portion (56) of the heavy machinery (50) and the portion of a site, wherein the at least one camera is configured to be attached to the heavy machinery or to be located elsewhere at a location which allows the camera to capture images of at least the movable portion of the heavy machinery and at least the portion of a site at which the heavy machinery is operating;
determining a current position of the movable portion of the heavy machinery and a load carried by the movable portion; ;
determining a destination position of the movable portion of the heavy machinery and the load;
identifying locations and dimensions of objects located in an area of the site comprising the current position and the destination position based on analyzing the received at least two images;
calculating a trajectory for at least the movable portion of the heavy machinery from the current position to the destination position, as to avoid collision of at least one of: the movable portion of heavy machinery and the load with any one of the objects; and
autonomously moving at least the movable portion of the heavy machinery along the calculated trajectory.

11. The method of claim 10, wherein determining at least one of the current position and the destination position comprises receiving the position from at least one of: a position system, a laser beam pointer and a database comprising a digital model of the site.

12. The method of claim 10, wherein determining the at least one of the current position and the destination position comprises calculating the at least one of the current position and the destination positions from the received images.

13. The method according to any one of claims 10-12, further comprising:
receiving from the at least one camera a plurality of images from the trajectory during the movement of the heavy machinery;
identifying at least one of: additional locations and dimensions of objects located along the trajectory; and
changing the trajectory based on the at least one of: identified additional locations and dimensions.

14. The method of claim 13, wherein the additional locations and dimensions of objects include at least one of: new locations of already identified objects and locations and dimensions of new objects.

15. The method according to any one of the claims 10-14, wherein, calculating the trajectory comprises:
receiving or conclude / analyze additional data: the additional data includes at least one of: dimensions of the load carried by the heavy machinery, information related to the heavy machinery, regulative requirements, safety requirements, environmental conditions and digital model of the site; and calculating the trajectory also based on the additional data.

## Patentansprüche

1. System (100) zum autonomen Betrieb von schweren Maschinen (50), umfassend:
zumindest eine Kamera (110),
die dafür konfiguriert ist, an der schweren Maschine befestigt zu sein oder anderswo an einer Stelle befindlich zu sein, wodurch es der Kamera möglich ist, Bilder von zumindest einem beweglichen Teil (56) der schweren Maschine und zumindest einem Teil eines Standorts, an dem die schwere Maschine arbeitet, zu erfassen, **gekennzeichnet durch**
eine Steuerung (120), die konfiguriert ist zum:
Empfangen, von der zumindest einen Kamera, zumindest zweier Bilder des zumindest beweglichen Teils der schweren Maschine und des Teils des Standorts; Bestimmen einer aktuellen Position (320) des beweglichen Teils der schweren Maschine und einer von dem beweglichen Teil getragenen Last; Empfangen einer Zielposition (330) des beweglichen Teils der schweren Maschine und der Last;
Identifizieren von Stellen und Abmessungen von Objekten (310), die sich in einem Bereich des Standorts befinden, der die aktuelle Position und die Zielposition umfasst, auf Basis der Analyse der zumindest zwei empfangenen Bilder; Berechnen einer Trajektorie (300)
für zumindest den beweglichen Teil der schweren Maschine und die Last von der aktuellen Position zu der Zielposition zum Vermeiden einer Kollision von zumindest einem von: dem beweglichen Teil der schweren Maschine und der Last mit irgendeinem der Objekte; und autonomen Bewegen zumindest des beweglichen Teils der schweren Maschine entlang der berechneten Trajektorie.

2. System nach Anspruch 1, wobei das Bestimmen zumindest einer der aktuellen Position und der Zielposition das Empfangen der Position von zumindest einem von Folgenden umfasst:
einem Positionssystem, einem Laserstrahlzeiger, einer Signalleuchte, Bildverarbeitungsverfahren, GPS-Transceiver und einer Datenbank umfassend ein digitales 2D- oder 3D-Modell des Standorts.

3. System nach Anspruch 1, wobei das Bestimmen der zumindest einen der aktuellen Position und der Zielposition das Berechnen der zumindest einen der aktuellen Position und der Zielpositionen aus den empfangenen Bildern umfasst.

4. System nach einem der vorhergehenden Ansprüche, wobei die Steuerung ferner konfiguriert ist zum:
Empfangen, von der zumindest einen Kamera, einer Vielzahl von Bildern von der Trajektorie während der Bewegung des beweglichen Teils der schweren Maschine;
Identifizieren zumindest eines von: zusätzlichen Stellen und Abmessungen von Objekten, die sich entlang der Trajektorie befinden; und
Ändern der Trajektorie auf Basis zumindest eines von: identifizierten zusätzlichen Stellen und Abmessungen.

5. System nach Anspruch 4, wobei die zusätzlichen Stellen und Abmessungen von Objekten zumindest eines von Folgenden beinhalten: neuen Stellen von bereits identifizierten Objekten und Stellen und Abmessungen von neuen Objekten.

6. System nach einem der vorhergehenden Ansprüche, ferner umfassend einen oder mehrere Sensoren, wobei der eine oder mehrere Sensoren ausgewählt sind aus einer Gruppe bestehend aus:
GNSS-Transceiver, Ultraschallsensor und Lichterkennungs- und Entfernungsmessungs- (LIDAR) Sensor, Signalleuchten-Potentiometer und Neigungssensor.

7. System nach einem der vorhergehenden Ansprüche, wobei das Berechnen der Trajektorie umfasst:
Berechnen von Sicherheitsabständen zwischen den Objekten und der schweren Maschine und deren Last.

8. System nach einem der vorhergehenden Ansprüche, wobei das Berechnen der Trajektorie umfasst:
Empfangen zusätzlicher Daten: die zusätzlichen Daten beinhalten zumindest eines von:
Abmessungen einer von der schweren Maschine getragenen Last, Informationen in Bezug auf die schwere Maschine, regulative Anforderungen, Sicherheitsanforderungen, Umgebungsbedingungen und digitales Modell des Standorts; und Berechnen der Trajektorie auch auf Basis der zusätzlichen Daten.

9. System nach einem der vorhergehenden Ansprüche, ferner umfassend ein Kommunikationsmodul zum Kommunizieren mit zumindest einem von: dem Prozessor der schweren Maschine, den Aktoren der schweren Maschine und einer externen Rechenvorrichtung.

10. Verfahren zum autonomen Betrieb von schweren Maschinen, **gekennzeichnet durch** die Schritte:
Empfangen, von zumindest einer Kamera (110), zumindest zweier Bilder von zumindest dem beweglichen Teil (56) der schweren Maschine (50)
und dem Teil eines Standorts, wobei die zumindest eine Kamera dafür konfiguriert ist, an der schweren Maschine befestigt zu sein oder anderswo an einer Stelle befindlich zu sein, wodurch es der Kamera möglich ist, Bilder von zumindest dem beweglichen Teil der schweren Maschine und zumindest dem Teil eines Standorts, an dem die schwere Maschine arbeitet, zu erfassen;
Bestimmen einer aktuellen Position des beweglichen Teils der schweren Maschine und einer von dem beweglichen Teil getragenen Last; Bestimmen einer Zielposition des beweglichen Teils der schweren Maschine und der Last; Identifizieren von Stellen und Abmessungen von Objekten, die sich in einem Bereich des Standorts befinden, der die aktuelle Position und die Zielposition umfasst, auf Basis der Analyse der zumindest zwei empfangenen Bilder; Berechnen einer Trajektorie für zumindest den beweglichen Teil der schweren Maschine von der aktuellen Position zu der Zielposition zum Vermeiden einer Kollision von zumindest einem von: dem beweglichen Teil der schweren Maschine und der Last mit irgendeinem der Objekte; und
autonomen Bewegen zumindest des beweglichen Teils der schweren Maschine entlang der berechneten Trajektorie.

11. Verfahren nach Anspruch 10, wobei das Bestimmen zumindest einer der aktuellen Position und der Zielposition das Empfangen der Position von zumindest einem von Folgenden umfasst:
einem Positionssystem, einem Laserstrahlzeiger und einer Datenbank umfassend ein digitales Modell des Standorts.

12. Verfahren nach Anspruch 10, wobei das Bestimmen der zumindest einen der aktuellen Position und der Zielposition das Berechnen der zumindest einen der aktuellen Position und der Zielpositionen aus den empfangenen Bildern umfasst.

13. Verfahren nach einem der Ansprüche 10-12, ferner umfassend:
Empfangen, von der zumindest einen Kamera, einer Vielzahl von Bildern von der Trajektorie während der Bewegung der schweren Maschine; Identifizieren von zumindest einem von: zusätzlichen Stellen und Abmessungen von Objekten, die sich entlang der Trajektorie befinden; und
Ändern der Trajektorie auf Basis zumindest eines von: identifizierten zusätzlichen Stellen und Abmessungen.

14. Verfahren nach Anspruch 13, wobei die zusätzlichen Stellen und Abmessungen von Objekten zumindest eines von Folgenden umfassen: neuen Stellen von bereits identifizierten Objekten und Stellen und Abmessungen von neuen Objekten.

15. Verfahren nach einem der Ansprüche 10-14, wobei das Berechnen der Trajektorie umfasst:
Empfangen oder Schlussfolgern / Analysieren zusätzlicher Daten: die zusätzlichen Daten beinhalten zumindest eines von: Abmessungen der von der schweren Maschine getragenen Last, Informationen in Bezug auf die schwere Maschine, regulative Anforderungen, Sicherheitsanforderungen, Umgebungsbedingungen und digitales Modell des Standorts; und Berechnen der Trajektorie auch auf Basis der zusätzlichen Daten.

## Revendications

1. Système (100) pour le fonctionnement autonome d'une machinerie lourde (50), comprenant :
au moins une caméra (110), configurée pour être attachée à la machinerie lourde ou pour être placée ailleurs à un emplacement qui permet à la caméra de capturer des images d'au moins une partie mobile (56) de la machinerie lourde et d'au moins une partie d'un site sur lequel la machinerie lourde est en fonctionnement **caractérisé par**
une unité de commande (120) configurée pour :
recevoir de l'au moins une caméra au moins deux images de l'au moins une partie mobile de la machinerie lourde et de la partie du site ;
déterminer une position actuelle (320) de la partie mobile de la machinerie lourde et une charge portée par la partie mobile ;
recevoir une position de destination (330) de la partie mobile de la machinerie lourde et de la charge ;
identifier des emplacements et des dimensions d'objets (310) situés dans une zone du site comprenant la position actuelle et la position de destination sur la base de l'analyse des au moins deux images reçues ;
calculer une trajectoire (300) pour au moins la partie mobile de la machinerie lourde et la charge depuis la position actuelle à la position de destination, afin d'éviter la collision d'au moins l'un de : la partie mobile de la machinerie lourde et la charge avec l'un quelconque des objets ; et
déplacer de manière autonome au moins la partie mobile de la machinerie lourde le long de la trajectoire calculée.

2. Système selon la revendication 1, dans lequel la détermination d'au moins l'une de la position actuelle et la position de destination comprend la réception de la position d'au moins l'un des éléments suivants : un système de position, un pointeur à faisceau laser, une balise, des procédés de traitement d'image, un émetteur-récepteur GPS et une base de données comprenant une modélisation numérique 2D ou 3D du site.

3. Système selon la revendication 1, dans lequel la détermination d'au moins l'une de la position actuelle et la position de destination comprend le calcul d'au moins l'une parmi la position actuelle et les positions de destination à partir des images reçues.

4. Système selon l'une quelconque des revendications précédentes, dans lequel l'unité de commande est en outre configurée pour :
recevoir de l'au moins une caméra une pluralité d'images de la trajectoire lors du déplacement de la partie mobile de la machinerie lourde ;
identifier au moins l'un des éléments suivants : emplacements et dimensions supplémentaires d'objets situés le long de la trajectoire ; et
modifier la trajectoire en fonction d'au moins l'un des éléments suivants : emplacements et dimensions supplémentaires identifiés.

5. Système selon la revendication 4, dans lequel les emplacements et dimensions supplémentaires d'objets comprennent au moins l'un des éléments suivants nouveaux emplacements d'objets déjà identifiés et emplacements et dimensions de nouveaux objets.

6. Système selon l'une quelconque des revendications précédentes, comprenant en outre un ou plusieurs capteurs, dans lequel l'un ou plusieurs capteurs sont sélectionnés dans un groupe constitué de : émetteur-récepteur GNSS, capteur à ultrasons et capteur de détection de lumière et de portée (LIDAR), potentiomètre de balise et capteur d'inclinaison.

7. Système selon l'une quelconque des revendications précédentes, dans lequel le calcul de la trajectoire comprend :
le calcul des marges de sécurité entre les objets et la machinerie lourde et sa charge.

8. Système selon l'une quelconque des revendications précédentes, dans lequel le calcul de la trajectoire comprend :
la réception de données supplémentaires : les données supplémentaires comprennent au moins l'un des éléments suivants :
dimensions d'une charge portée par la machinerie lourde, informations relatives à la machinerie lourde, exigences réglementaires, exigences de sécurité, conditions environnementales et modélisation numérique du site ; et
le calcul de la trajectoire également sur la base des données supplémentaires.

9. Système selon l'une quelconque des revendications précédentes, comprenant en outre un module de communication pour communiquer avec au moins l'un des éléments suivants : le processeur de la machinerie lourde, les actionneurs de la machinerie lourde et un dispositif informatique externe.

10. Procédé de fonctionnement autonome d'une machinerie lourde, **caractérisé par** les étapes de :
réception en provenance d'au moins une caméra (110) d'au moins deux images d'au moins une partie mobile (56) de la machinerie lourde (50) et de la partie d'un site, dans lequel l'au moins une caméra est configurée pour être attachée à la machinerie lourde ou pour être située ailleurs à un emplacement qui permet à la caméra de capturer des images d'au moins la partie mobile de la machinerie lourde et d'au moins la partie d'un site sur laquelle la machinerie lourde est en fonctionnement ;
détermination d'une position actuelle de la partie mobile de la machinerie lourde et d'une charge portée par la partie mobile ;
détermination d'une position de destination de la partie mobile de la machinerie lourde et de la charge ;
identification d'emplacements et de dimensions d'objets situés dans une zone du site comprenant la position actuelle et la position de destination sur la base de l'analyse des au moins deux images reçues ;
calcul d'une trajectoire pour au moins la partie mobile de la machinerie lourde depuis la position actuelle à la position de destination, afin d'éviter la collision d'au moins l'une de : la partie mobile de la machinerie lourde et la charge avec l'un quelconque des objets ; et
déplacement autonome d'au moins la partie mobile de la machinerie lourde le long de la trajectoire calculée.

11. Procédé selon la revendication 10, dans lequel la détermination d'au moins l'une de la position actuelle et de la position de destination comprend la réception de la position à partir d'au moins l'un parmi : un système de positionnement, un pointeur à faisceau laser et une base de données comprenant une modélisation numérique du site.

12. Procédé selon la revendication 10, dans lequel la détermination de l'au moins une de la position actuelle et la position de destination comprend le calcul d'au moins l'une parmi la position actuelle et les positions de destination à partir des images reçues.

13. Procédé selon l'une quelconque des revendications 10 à 12, comprenant en outre :
la réception depuis l'au moins une caméra d'une pluralité d'images de la trajectoire pendant le déplacement de la machinerie lourde ;
l'identification d'au moins l'un des éléments suivants : emplacements et dimensions supplémentaires d'objets situés le long de la trajectoire ; et
modification de la trajectoire sur la base d'au moins l'un des éléments suivants :
emplacements et dimensions supplémentaires identifiés.

14. Procédé selon la revendication 13, dans lequel les emplacements et dimensions supplémentaires d'objets comprennent au moins l'un des éléments suivants : nouveaux emplacements d'objets déjà identifiés et emplacements et dimensions de nouveaux objets.

15. Procédé selon l'une quelconque des revendications 10 à 14, dans lequel le calcul de la trajectoire comprend :
la réception ou la conclusion / analyse de données complémentaires les données complémentaires comprennent au moins l'un des éléments suivants : dimensions de la charge portée par la machinerie lourde, informations relatives à la machinerie lourde, exigences réglementaires, exigences de sécurité, conditions environnementales et modélisation numérique du site ; et
le calcul de la trajectoire également sur la base des données supplémentaires.
